# FASCICULE DE BREVET EUROPEEN

(11) **EP 2 579 486 B1**
(45) Date de publication et mention de la délivrance du brevet: **18.09.2013**
(21) Numéro de dépôt: 12169930.0
(22) Date de dépôt: 30.05.2012
(51) Int. Cl.: H04B 17/00, H04L 1/00

(54) **Procédé de transmission optimisée par télémétrie RF entre un dispositif médical implantable actif et un récepteur externe distant**
Optimiertes Übertragungsverfahren über RF-Telemetrie zwischen einer aktiven medizinischen implantierbaren Vorrichtung und einem externen Fernempfänger
Optimised transmission method by RF telemetry between an active implantable medical device and a remote external receiver

(30) Priorité: 06.10.2011 FR 1159005
(43) Date de publication de la demande: 10.04.2013
(73) Titulaire: Sorin CRM SAS, 92140 Clamart (FR)
(72) Inventeur: Scordilis, Thierry, 38320 Poisat (FR)
(74) Mandataire: Dupuis-Latour, Dominique

(56) Documents cités:
- WO-A2-2006/102538
- US-A1- 2008 016 118
- US-A1- 2010 198 304

## Description

L'invention concerne les "dispositifs médicaux actifs" tels que définis par la directive 93/42/CE du 14 juin 1993 du Conseil des communautés européennes, et notamment les implants de type "dispositifs médicaux implantables actifs" tels que définis par la directive du Conseil 90/385/CEE du 20 juin 1990.

Cette définition inclut en particulier les appareils chargés de surveiller l'activité cardiaque et de générer des impulsions de stimulation, de resynchronisation, de défibrillation et/ou de cardioversion en cas de trouble du rythme détecté par l'appareil. Elle inclut aussi les appareils neurologiques, les pompes de diffusion de substances médicales, les implants cochléaires, les capteurs biologiques implantés, etc., ainsi que les dispositifs de mesure de pH ou encore d'impédance intracorporelle (telle que mesure d'impédance transpulmonaire ou d'impédance intracardiaque). On notera également que, si l'invention s'applique de manière particulièrement avantageuse aux appareils implantés tels que stimulateurs, cardioverteurs ou défibrillateurs, elle peut tout aussi bien être mise en oeuvre avec des dispositifs médicaux non implantés, par exemple des enregistreurs de données comme les appareils Holter externes destinés à la surveillance et à l'enregistrement en ambulatoire de certains paramètres physiologiques tels que par exemple l'activité cardiaque.

La plupart des dispositifs médicaux actifs sont conçus pour permettre un échange de données avec un "programmateur", qui est un appareil externe permettant de vérifier le paramétrage du dispositif, de lire (en temps réel ou non) des informations enregistrées par celui-ci ou d'y inscrire des informations, ou encore de mettre à jour le logiciel interne de pilotage du dispositif.

Cet échange de données entre le dispositif médical et le programmateur est effectué par télémétrie, c'est-à-dire par une technique de transmission à distance d'informations, sans contact galvanique.

Jusqu'à présent, la télémétrie était le plus souvent opérée par couplage inductif entre des bobines du dispositif implanté et du programmateur, technique connue sous le nom de "procédé par induction". Cette technique présente cependant l'inconvénient, en raison de la très faible portée d'un tel couplage, de nécessiter l'utilisation d'une "tête de télémétrie" reliée au programmateur et contenant une bobine qu'un opérateur place au voisinage du site où est implanté le dispositif.

Il a été récemment proposé de mettre en oeuvre une autre technique de couplage non galvanique, utilisant les deux composantes d'une onde électromagnétique produite par des circuits émetteurs/récepteurs opérant dans le domaine des radiofréquences (RF), typiquement des fréquences de l'ordre de plusieurs centaines de mégahertz ou de quelques gigahertz. Cette technique, dite de "télémétrie RF" permet de programmer ou interroger des implants à des distances supérieures à 3 m, et autorise donc l'échange d'informations sans manipulation d'une tête de télémétrie, voire même sans intervention d'un opérateur externe.

Un dispositif médical actif comprenant de tels moyens de télémétrie RF est par exemple décrit dans le EP 1 862 191 A1 (ELA Médical).

Le protocole de communication entre le dispositif actif (généralement un implant) et la station de base (programmateur du dispositif de "home monitor") est notamment régi par la norme EN 301839 *"Compatibilité électromagnétique et spectre radioélectrique (ERM) - Dispositifs à courte portée (SRD) - Implants médicaux actifs de puissance ultra basse (ULPAMI) et périphériques (ULP-AMI-P) fonctionnant dans la plage de fréquences de 402 MHz à 405 MHz".* On notera toutefois que l'invention n'est pas limitée à une utilisation dans les bandes 402-405 MHz, dite bande MICS (*Medical Implants Communication Systems*) ni 400-407 MHz, dite bande MEDS (*Medical External Device Service*), mais qu'elle est applicable de façon générale à toutes les bandes susceptibles d'être utilisées pour de la télémétrie RF, notamment les bandes banalisées publiques ISM (*Industriel, Scientifique et Médical*) 433-434 MHz, 863-870 MHz, 902-928 MHz et 2,4 GHz utilisées par les dispositifs médicaux.

La télémétrie RF est toutefois sujette à de nombreuses perturbations par l'environnement électromagnétique, notamment les signaux de radio, de télévision et de téléphonie mobile, sans compter les nombreux parasites spécifiques susceptibles d'être produits dans l'environnement immédiat du porteur de l'implant (par exemple en milieu hospitalier). Toutes ces perturbations sont susceptibles de produire des interférences et de perturber la transmission des données.

À la différence des techniques par induction qui présentent une bonne immunité aux parasites, il n'est donc pas certain qu'une transmission RF puisse être menée à son terme sans être interrompue.

Et si la transmission s'accompagne d'un trop grand nombre d'erreurs, non récupérables, le processus doit être abandonné pour être réitéré complètement, de préférence avec de nouveaux paramètres de transmission (autre type de modulation, débit d'émission réduit, choix d'un autre canal). En tout état de cause, on aura dépensé de l'énergie pour une communication qui n'a pas abouti, donc pour rien.

Or la télémétrie RF implique une dépense énergétique relativement importante, tout au moins à l'échelle d'un implant dont la durée de vie est un paramètre extrêmement critique, de sorte que la multiplication des communications interrompues pourra avoir à terme une incidence non négligeable sur l'autonome de l'implant.

Pour l'optimisation des transmissions, il importe de choisir avant de commencer l'émission des données un type de modulation spécifique, et un niveau de débit de données, qui conditionneront les performances de la liaison.

Ces paramètres de type de modulation et de débit (qui seront appelés collectivement "configuration de transmission") sont des facteurs participant au "budget de liaison", c'est-à-dire à ce dont l'implant dispose pour faire fonctionner l'application de transmission RF.

Ce budget de liaison est lié à la distance applicative à laquelle les données émises par l'implant peuvent être reçues. Il comprend les paramètres fondamentaux des différents éléments fonctionnels mis en oeuvre : gain d'antenne, puissance d'émission, canal de transmission, bande passante (cette dernière étant directement liée au schéma de modulation utilisé ainsi qu'au débit des données).

Si l'on se trouve dans des conditions limites quant au budget de liaison, il convient de surveiller le bon ou le mauvais déroulement de la transmission, de manière à modifier éventuellement la configuration de transmission en cas d'échec avant réitération de cette transmission.

Ainsi, le US 2010/0198304 A1 propose d'évaluer en cours de transmission une métrique de qualité de service (QoS) et de modifier si besoin le schéma de modulation en fonction de cette évaluation.

L'inconvénient de cette méthode est qu'elle nécessite d'être confrontée au problème pour réagir et modifier le schéma de modulation. Il s'agit alors d'opérer une reconfiguration "à la volée", avec un temps perdu important entre le moment où l'implant décide de modifier la configuration de transmission et celui où la transmission peut être reprise avec la nouvelle configuration.

En effet, les changements à opérer ne sont pas instantanés car il faut reconstruire le système d'horloge, refaire les synchronisations, réinitialiser le préambule des paquets pour la synchronisation matérielle, etc. Ces changements sont coûteux en temps et retardent la disponibilité des données côté appareil récepteur, ce qui est un inconvénient sérieux lorsque ces données sont critiques.

Enfin, même après un changement de configuration, on ne peut pour autant être sûr que la nouvelle configuration de transmission soit optimale - il faudra en effet attendre une nouvelle évaluation du facteur de QoS pour le savoir.

Un autre aspect du choix de la configuration de transmission, outre la plus ou moins grande probabilité d'échec en milieu bruité, est la possibilité d'augmenter le budget de liaison par réduction des débits et donc de la bande passante et par voie de conséquence l'incidence du bruit dans la bande. Cette réduction procure un gain sur la distance de propagation applicative (typiquement, la chambre du patient) et/ou une meilleure immunité à l'encontre des variabilités d'environnement pour une distance donnée (typiquement, l'environnement d'une salle d'opération). Mais la réduction du débit s'accompagne bien entendu d'un allongement de la durée de transmission, qui peut être dans certains cas un inconvénient.

Le problème de l'invention est de trouver une technique permettant de déterminer directement la meilleure configuration de transmission parmi plusieurs, cette détermination étant effectuée *a priori* avant de commencer à émettre.

Le fait de pouvoir directement utiliser le meilleur mode de communication plutôt que d'en essayer plusieurs avant d'arriver au bon - comme dans les techniques mettant en oeuvre une analyse de QoS - est un élément susceptible de procurer un gain significatif à la fois (i) de consommation, donc de durée de vie de l'implant, et (ii) de disponibilité de l'information à son destinataire (le programmateur distant qui récupère les données envoyées par l'implant).

Cet aspect revêt une importance particulière dans le cas de phases de communication de "contrôle/commande" entre un programmateur et un implant : dans ce dernier cas, la vitesse de transmission des données n'est pas critique (les données sont en général peu volumineuses), mais en revanche le fait qu'elles soient effectivement reçues (la réception déterministe) est très important.

Le but de l'invention est ainsi de proposer un processus optimisé de choix de la configuration de transmission, de manière à trouver, en fonction des cas particuliers d'informations à transmettre, le meilleur compromis entre sécurisation de la délivrance de l'information au dispositif destinataire et rapidité (débit) de transmission, ceci tout en minimisant les risques de réitération par essais/erreurs, réduisant ainsi la consommation de l'implant au strict minimum nécessaire.

Le point de départ de l'invention est la constatation de ce que l'on connaît *a priori* le type des données à transmettre (ce sont des données mémorisées dans l'implant), et donc le caractère plus ou moins critique de ces données.

L'idée de base de l'invention consiste à adapter directement les paramètres de la configuration de transmission en fonction de la criticité plus ou moins grande de ces informations, et non en fonction d'un paramètre de QoS mesuré *a posteriori* une fois l'émission déclenchée.

Ainsi, les données les plus critiques seront transmises avec les paramètres de transmission les plus sûrs, c'est-à-dire ceux qui offrent la meilleure probabilité de transmission réussie dès le premier essai.

De cette manière, la transmission RF sera optimisée directement et immédiatement, et non de façon graduelle au fur et à mesure de son déroulement comme dans l'état de la technique.

Plus précisément, l'invention propose un procédé de transmission par télémétrie RF qui prévoit, préalablement à la transmission des informations, des étapes de :
- caractérisation des informations à transmettre, par regroupement en classes d'informations et attribution à chaque classe d'information d'un indice de criticité définissant un rang de priorité entre les différentes classes d'informations à transmettre ;
- définition d'une pluralité de configurations de transmission possibles (chaque configuration de transmission étant définie par au moins une caractéristique parmi : schéma de modulation, paramètre du schéma de modulation et débit d'émission de données) ;
- caractérisation des configurations de transmission ainsi définies, par attribution à chaque configuration de transmission d'un indice de fiabilité inversement fonction de la probabilité d'échec de la transmission dans un environnement bruité ; et
- mise en relation ordonnée des indices de criticité avec les configurations de transmission, les indices de criticité des plus hautes priorités étant affectés aux configurations de transmission présentant les indices de fiabilité supérieurs, et inversement.

Ultérieurement, sur requête d'émission d'une information à transmettre, le dispositif implantable actif sélectionnera l'une de ces configurations de transmission en fonction de l'indice de criticité caractérisant l'information à transmettre et émettra, avec la configuration de transmission ainsi sélectionnée, un message contenant l'information à transmettre.

En cas de requête d'émission d'une pluralité d'informations à transmettre en séquence, il est possible d'émettre une pluralité de sous-messages successifs avec pour chacun une configuration de transmission différente, chacun de ces sous-messages regroupant les informations caractérisées par un même indice de criticité. Les sous-messages successifs sont de préférence émis en commençant par ceux regroupant les informations caractérisées par les indices de criticité les plus élevés.

Les schémas de modulation peuvent en particulier être choisis parmi : modulation FSK (par déplacement de fréquence), GFSK (par déplacement de fréquence gaussien), PSK (par déplacement de phase), QPSK (par déplacement de phase en quadrature), OQPSK (par déplacement de phase en quadrature orthogonale), MSK (à déplacement minimum), SF (avec étalement de spectre) ou encore OOK (en tout-ou-rien). Les débit d'émission peuvent être choisis dans la gamme : 2 kbps, 16 kbps, 32 kbps, 100 kbps, 200 kbps et 400 kbps.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 illustre de façon schématique un ensemble de dispositifs médicaux communiquant entre eux par liaison RF, l'un de ces dispositifs étant implanté dans le corps d'un patient.
La Figure 2 illustre de façon schématique la manière dont est mise en oeuvre une reconfiguration de la configuration de transmission dans le cas de l'état de la technique.
Les Figures 3A et 3B sont un organigramme général montrant les différentes étapes mises en oeuvre par le procédé de l'invention pour la détermination de la configuration de transmission optimale en fonction de la criticité des informations à transmettre.

On va maintenant décrire un exemple de mise en oeuvre du procédé de l'invention.

Ce procédé est exécuté par des moyens principalement logiciels, au moyen d'algorithmes appropriés exécutés par un microcontrôleur, un processeur numérique de signal ou une machine d'états câblée. Pour la clarté de l'exposé, les divers traitements appliqués seront décomposés et schématisés par un certain nombre de blocs fonctionnels distincts présentés sous forme de circuits interconnectés, mais cette représentation n'a toutefois qu'un caractère illustratif, ces circuits comprenant des éléments communs et correspondant en pratique à une pluralité de fonctions globalement exécutées par un même logiciel.

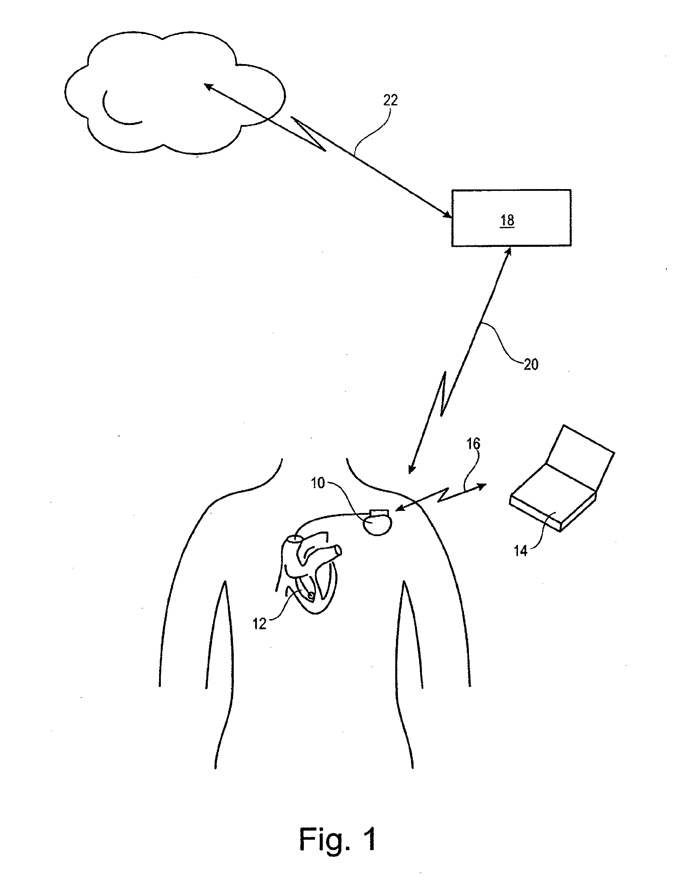

Sur la Figure 1, on a illustré un ensemble de dispositifs avec par exemple un défibrillateur/stimulateur/resynchroniseur implanté 10, pourvu d'une sonde 12 disposée dans le myocarde (l'invention n'étant bien entendu pas limitée à ce type particulier d'implant). Une communication peut être établie entre cet implant 10 et un programmeur 14 par une liaison RF 16, ou avec un boîtier 18 situé à une plus grande distance, par exemple dans la chambre d'hôpital, également par une liaison RF 20. Le boîtier peut être notamment un boîtier de *home monitoring* (surveillance à distance), relié par une liaison de données 22 à un serveur distant susceptible d'assurer le suivi du patient et l'analyse en temps réel ou différé des informations collectées par l'implant 10.

La télémétrie RF est typiquement opérée dans les bandes MICS ou ISM avec une "configuration de transmission" donnée, ce terme incluant :
- le schéma de modulation : par exemple FSK, GFSK, etc.,
- le paramètre éventuel de ce schéma de modulation : par exemple 2-FSK, 4-FSK, etc. et
- le débit d'émission de données : par exemple 400 kbps (kilobits par seconde), 200 kbps ... 16 kbps, 2 kbps,
et ceci dans un canal de communication présélectionné en suivant la rè-glementation en vigueur, donc avec une bande passante allouée correspondant à la largeur de ce canal.

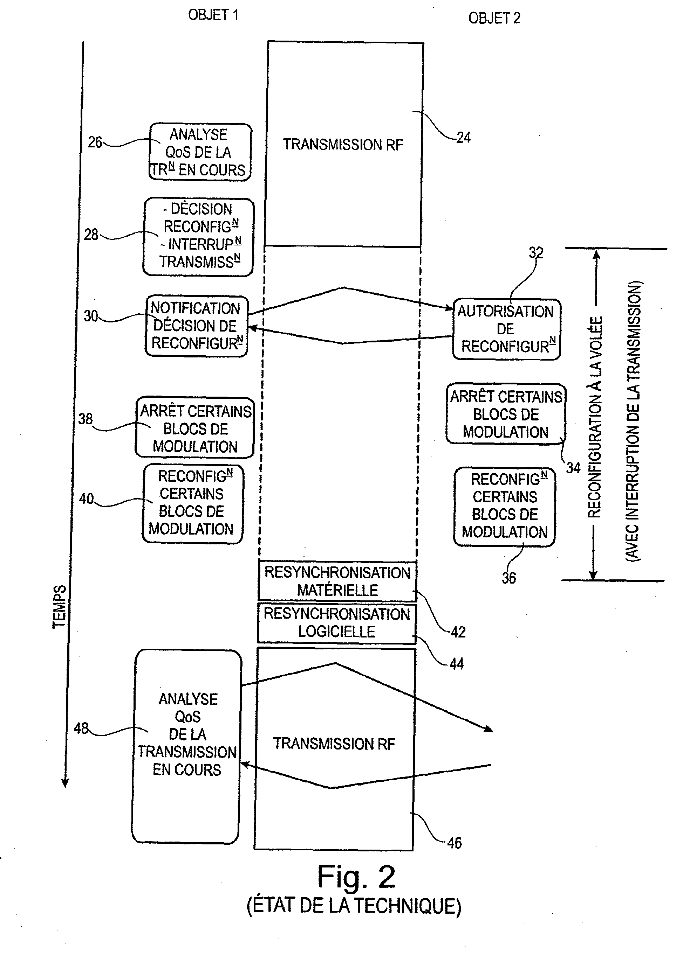

La Figure 2 illustre, dans le cas d'un dispositif fonctionnant selon l'état de la technique, le séquencement des différentes étapes d'un changement de configuration de transmission en cours de transmission.

Dans ce cas, pendant le déroulement d'une transmission RF (étape 24), une analyse de la qualité (QoS) de la transmission en cours est opérée par l'un des deux objets émetteurs/récepteurs (implant ou programmateur), par exemple l'objet 1 (étape 26).

Si cette analyse révèle un niveau de qualité médiocre, en particulier avéré par de trop nombreux échecs de transmission entraînant une répétition des séquences d'envoi des messages, une décision de reconfiguration est prise, et la transmission interrompue (étape 28).

Cette décision de reconfiguration est notifiée à l'autre objet émetteur/récepteur (étape 30), qui l'autorise (étape 32). Ceci a pour effet de provoquer l'arrêt d'un certain nombre de blocs de modulation (étape 34) et la reconfiguration des caractéristiques de la configuration de transmission : schéma de modulation, paramètre du schéma de modulation et/ou débit d'émission des données (étapes 34 et 36).

Des opérations correspondantes sont exécutées par l'autre objet, de son côté (étapes 38 et 40).

Afin que les deux objets puissent échanger à nouveau des informations, il est nécessaire d'opérer une resynchronisation matérielle puis logicielle (étapes 42 et 44) avec reconstruction du système d'horloge, rétablissement de la synchronisation, réinitialisation des préambules de paquets, etc.

La transmission peut alors être rétablie (étape 46).

Il n'est toutefois pas certain que les changements qui aient été opérés soient optimaux, et une analyse QoS de la nouvelle transmission en cours reste de ce fait nécessaire (étape 48).

Comme on peut le constater, le temps d'interruption nécessaire à la reconfiguration à la volée des paramètres de transmission, à savoir l'intervalle entre les étapes 24 et 46, est particulièrement long compte tenu des nombreuses opérations à exécuter du côté de chacun des deux objets afin qu'ils puissent à nouveau communiquer ensemble sur la base de la nouvelle configuration de transmission.

Un autre inconvénient tient au fait que l'on ne pourra savoir qu'*a posteriori* si la nouvelle configuration de transmission est optimale, par l'analyse QoS de la nouvelle transmission après modification des caractéristiques de la configuration de transmission. Si la nouvelle configuration n'est pas optimale, on risque de se trouver dans une situation pouvant conduire à nouveau à une décision de reconfiguration, avec ré-interruption de la transmission.

L'idée de base de l'invention consiste à pallier ces inconvénients, en minimisant le nombre de changements potentiels, et en choisissant directement la configuration de transmission la plus sûre en fonction de l'information à transmettre.

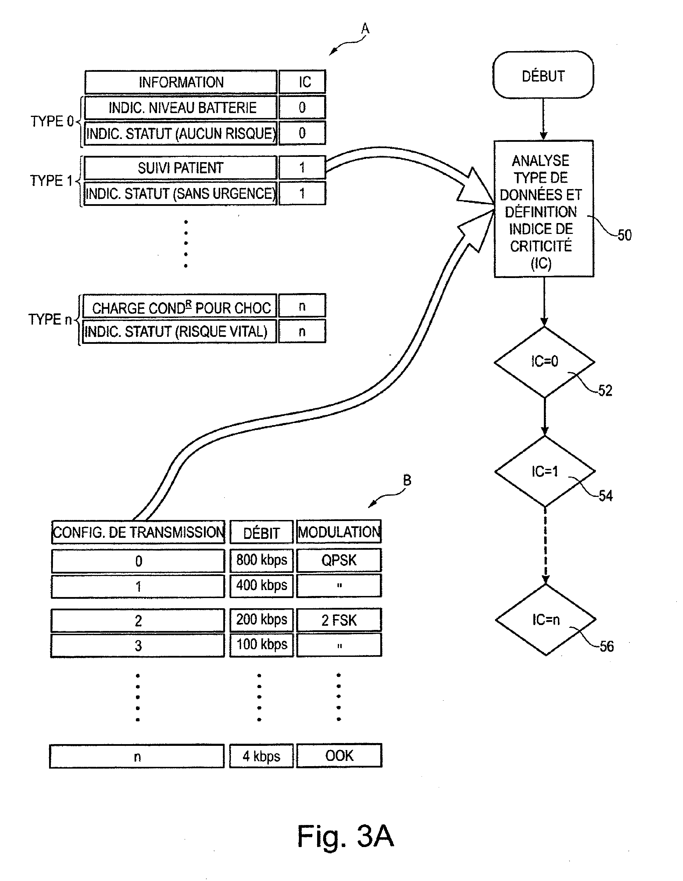

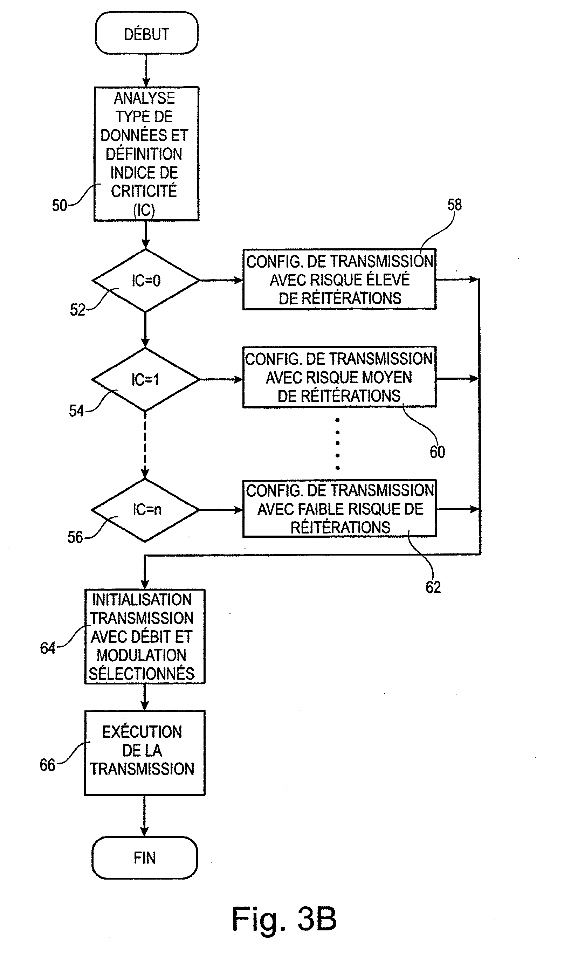

La solution de l'invention est illustrée sur les Figures 3A et 3B.

L'idée de base consiste à :
1°) attribuer à chaque classe d'information un indice de criticité permettant de hiérarchiser les différentes informations à transmettre en fonction du degré d'importance qui leur est propre (comme schématisé par le tableau A sur la Figure 3A) ;
2°) caractériser les configurations de transmission possibles, en attribuant à chacune un indice de fiabilité en fonction de la probabilité d'échec de la transmission dans un environnement bruité (comme schématisé par le tableau B sur la Figure 3A) ; et
3°) associer de façon ordonnée les indices de criticité avec les configurations de transmission, les indices de criticité des plus hautes priorités étant affectés aux configurations de transmission présentant les indices de fiabilité supérieurs, et inversement.

Pour ce faire, les différentes informations susceptibles d'être transmises sont regroupées en "classes d'informations" auxquelles sont attribués des "indices de criticité" IC respectifs, l'indice étant d'autant plus élevé que l'information correspondante est critique et doit être transmise en priorité et avec le plus grand degré de sécurité (c'est-à-dire en évitant au maximum les risques d'interruption en cours de transmission). On peut ainsi avoir par exemple :
- IC = 0 (criticité minimale) pour : indication du niveau de la batterie de l'implant, indicateur d'un statut ne correspondant à aucun risque vital, ... c'est-à-dire des informations qui n'ont principalement pour objet que de permettre une meilleure connaissance du système implanté ;
- IC = 1 : informations générales concernant le suivi du patient (date de la dernière visite, etc.), indicateur d'un statut ne nécessitant aucune action à bref délai, ... ;
- IC = *n* (criticité maximale) : signalement de ce que le condensateur se charge pour la délivrance d'un choc de défibrillation, indicateur de statut correspondant à un risque vital pour le patient, anomalie grave de fonctionnement, ...

De façon similaire, les différentes configurations de transmission possibles vont être hiérarchisées, en attribuant à chacune un indice de fiabilité inversement en fonction de la probabilité d'échec de la transmission en environnement bruité.

L'indice correspondant sera ainsi minimal pour la configuration procurant la transmission la moins fiable (mais, en contrepartie, généralement la plus rapide), et maximal pour celle assurant la transmission la plus fiable (mais généralement la plus lente). On aura par exemple, de la moins fiable (la plus rapide) à la plus fiable (la plus lente) :
- QPSK 800 kbps,
- QPSK 400 kbps,
- 2-FSK à 200 kbps,
- ...
- 2-FSK à 100 kbps,
- OOK à 4 kbps.

Les schémas de modulation des diverses configurations de transmission peuvent être choisis - de façon non limitative - parmi :
- modulation FSK (par déplacement de fréquence),
- modulation GFSK (par déplacement de fréquence gaussien),
- modulation PSK (par déplacement de phase),
- modulation QPSK (par déplacement de phase en quadrature),
- modulation OQPSK (par déplacement de phase en quadrature orthogonale),
- modulation MSK (à déplacement minimum),
- modulation SF (avec étalement de spectre), ou encore
- modulation OOK (en tout-ou-rien),
avec pour certaines modulations le cas échéant des paramètres de schémas de modulation différents (4-FSK, 2-FSK ...).

L'immunité au bruit augmente avec l'indice attribué à la configuration de transmission, diminuant d'autant les risques d'interruption de la transmission, et/ou permettant une transmission à plus grande distance sans risque d'interruption.

Ainsi, entre une modulation 2-FSK à 400 kbps et une modulation 2-FSK à 4 kbps, la sensibilité augmente de - 93 dBm à - 112 dBm, soit un gain de +19 dB - mais en revanche avec un débit cent fois moindre (on notera que, idéalement, on double les portées applicatives tous les 6 dB).

A l'extrême, entre une modulation QPSK à 800 kbps et une modulation OOK à 4 kbps, donc entre les deux niveaux extrêmes des configurations de transmission possibles dans l'exemple donné ici, on obtient un gain de sensibilité de près de +50 dB, ce qui permet concrètement de pouvoir prendre en compte toutes les situations possibles.

La Figure 3B illustre les différentes étapes successives de la transmission exécutée selon l'invention.

Cette transmission peut se dérouler après que les classes de données aient été définies (étape 50) avec leur indice de criticité respectif, de la manière que l'on a exposée plus haut.

Ensuite, en fonction de l'indice de criticité IC plus ou moins élevé (tests 52, 54 ... 56) le système établit une mise en relation de cet indice de criticité avec une configuration de transmission. Une configuration de transmission correspondante est ainsi sélectionnée (étapes 58, 60 ... 62) parmi celles listées dans le tableau B de la Figure 3A, pour qu'elle corresponde de la façon la plus appropriée à la nature de l'information à transmettre, reflétée par son indice de criticité IC (les indices de criticité des plus hautes priorités étant affectés aux configurations de transmission présentant les indices de fiabilité supérieurs, et inversement).

La transmission peut alors être initialisée avec le débit, le schéma de modulation et le paramètre du schéma de modulation ainsi sélectionnés (étape 64), puis exécutée sur ces bases (étape 66).

En cas de pluralité d'informations à transmettre, il est possible soit de transmettre toutes les informations en un message unique, sur la base d'une configuration de transmission correspondant à l'indice de criticité le plus élevé, soit de découper ce message en sous-messages, qui seront émis chacun avec une configuration de transmission différente, pour les messages d'indice de criticité différents. Ces sous-messages successifs sont alors émis en commençant par ceux regroupant les informations caractérisées par les indices de criticité les plus élevés.

Dans le cas d'informations de faible criticité, une autre possibilité consiste à différer l'envoi des messages correspondants, afin d'éviter de consommer une partie de l'énergie de la batterie de l'implant pour la transmission d'informations qui ne présentent *a priori* pas d'intérêt majeur. La transmission de ces informations pourra être opérée à une autre occasion, par exemple lors d'une visite chez le médecin au lieu de l'être quotidiennement. On évitera ainsi une consommation inutile d'énergie, sans pour autant créer un risque en ce qui concerne la santé du patient créée par l'altération de son suivi.

## Revendications

1. Un procédé de transmission d'informations d'un dispositif médical implantable actif (10) vers un récepteur externe distant (14, 18) par télémétrie RF, **caractérisé par** les étapes suivantes :
- préalablement à la transmission des informations :
· caractérisation des informations à transmettre, par regroupement en classes d'informations (TYPE 0 ... TYPE n) et attribution à chaque classe d'information d'un indice de criticité (IC) définissant un rang de priorité entre les différentes classes d'informations à transmettre ;
· définition d'une pluralité de configurations de transmission possibles (0, 1 ... n), chaque configuration de transmission étant définie par au moins une caractéristique du groupe comprenant : schéma de modulation, paramètre du schéma de modulation et débit d'émission de données ;
· caractérisation des configurations de transmission ainsi définies, par attribution à chaque configuration de transmission d'un indice de fiabilité inversement fonction de la probabilité d'échec de la transmission dans un environnement bruité ;
· mise en relation ordonnée des indices de criticité avec les configurations de transmission, les indices de criticité des plus hautes priorités étant affectés aux configurations de transmission présentant les indices de fiabilité supérieurs, et inversement ;
- par le dispositif implantable actif, sur requête d'émission d'une information à transmettre :
· sélection (52-62) d'une configuration de transmission en fonction de l'indice de criticité caractérisant l'information à transmettre, et
· émission (64, 66), avec la configuration de transmission ainsi sélectionnée, d'un message contenant l'information à transmettre.

2. Le procédé de la revendication 1, comprenant, en cas de requête par le dispositif implantable actif d'émission d'une pluralité d'informations à transmettre en séquence :
- l'émission d'une pluralité de sous-messages successifs avec pour chacun une configuration de transmission différente, chacun de ces sous-messages regroupant les informations **caractérisées par** un même indice de criticité.

3. Le procédé de la revendication 2, dans lequel les sous-messages successifs sont émis en commençant par ceux regroupant les informations **caractérisées par** les indices de criticité les plus élevés.

4. Le procédé de la revendication 1, dans lequel les schémas de modulation des diverses configurations de transmission sont choisis dans le groupe comprenant : modulation FSK par déplacement de fréquence, modulation GFSK par déplacement de fréquence gaussien, modulation PSK par déplacement de phase, modulation QPSK par déplacement de phase en quadrature, modulation OQPSK par déplacement de phase en quadrature orthogonale, modulation MSK à déplacement minimum, modulation SF avec étalement de spectre, modulation OOK en tout-ou-rien.

5. Le procédé de la revendication 1, dans lequel les débit d'émission des données des diverses configurations de transmission sont choisis dans le groupe comprenant les valeurs : 2 kbps, 16 kbps, 32 kbps, 100 kbps, 200 kbps et 400 kbps.

## Patentansprüche

1. Verfahren zur Übertragung von Informationen von einer aktiven implantierbaren medizinischen Vorrichtung (10) an einen fernen externen Empfänger (14, 18) durch RF-Telemetrie, **gekennzeichnet durch** die folgenden Schritte:
- vor der Übertragung der Informationen:
. Charakterisierung der zu übertragenden Informationen **durch** Bündelung in Informationsklassen (TYP 0 ... TYP n) und Zuteilung eines Kritikalitätsindex (IC) zu jeder Informationsklasse, der einen Prioritätsrang zwischen den verschiedenen zu übertragenden Informationsklassen definiert;
. Definition einer Vielzahl von möglichen Übertragungskonfigurationen (0, 1 ... n), wobei jede Übertragungskonfiguration **durch** mindestens ein Merkmal der Gruppe definiert wird, die enthält: Modulationsschema, Parameter des Modulationsschemas und Datensendegeschwindigkeit;
. Charakterisierung der so definierten Übertragungskonfigurationen **durch** Zuteilung eines Zuverlässigkeitsindex zu jeder Übertragungskonfiguration, der eine umgekehrte Funktion der Scheiterwahrscheinlichkeit der Übertragung in einer verrauschten Umgebung ist;
. geordnete Verknüpfung der Kritikalitätsindices mit den Übertragungskonfigurationen, wobei die Kritikalitätsindices der höchsten Prioritäten den Übertragungskonfigurationen zugewiesen werden, die die höheren Zuverlässigkeitsindices aufweisen, und umgekehrt;
- **durch** die aktive implantierbare Vorrichtung, bei Anforderung des Sendens einer zu übertragenden Information:
. Auswahl (52-62) einer Übertragungs-konfiguration abhängig vom die zu übertragende Information charakterisierenden Kritikalitäts-index, und
. Senden (64, 66) einer die zu übertragende Information enthaltenden Mitteilung mit der so ausgewählten Übertragungskonfiguration.

2. Verfahren nach Anspruch 1, das im Fall einer Anforderung des Sendens einer Vielzahl von sequentiell zu übertragenden Informationen durch die aktive implantierbare Vorrichtung enthält:
- das Senden einer Vielzahl von aufeinanderfolgenden Teilmitteilungen, mit für jede einer anderen Übertragungskonfiguration, wobei jede dieser Teilmitteilungen die durch den gleichen Kritikalitätsindex charakterisierten Informationen bündelt.

3. Verfahren nach Anspruch 2, wobei die aufeinanderfolgenden Teilmitteilungen gesendet werden, indem mit denjenigen begonnen wird, die die durch die höchsten Kritikalitätsindices charakterisierten Informationen bündeln.

4. Verfahren nach Anspruch 1, wobei die Modulationsschemata der verschiedenen Übertragungs-konfigurationen aus der Gruppe ausgewählt werden, die enthält: FSK-Modulation durch Frequenzumtastung, GFSK-Modulation durch Gauß'sche Frequenzumtastung, PSK-Modulation durch Phasenumtastung, QPSK-Modulation durch Quadraturphasenumtastung, OQPSK-Modulation durch orthogonale Quadraturphasenumtastung, MSK-Modulation mit minimaler Umtastung, SF-Modulation mit Spektrumsspreizung, OOK-Ein/Aus-Modulation.

5. Verfahren nach Anspruch 1, wobei die Datensendegeschwindigkeiten der verschiedenen Übertragungskonfigurationen aus der Gruppe ausgewählt werden, die die folgenden Werte enthält: 2 kbps, 16 kbps, 32 kbps, 100 kbps, 200 kbps und 400 kbps.

## Claims

1. A method of transmission of information elements from an active implantable medical device (10) to a remote external receiver (14, 18) by RF telemetry, **characterized by** the following steps:
- before transmission of information elements:
• characterizing the information elements to be transmitted by grouping them into classes of information (TYPE0 ... TYPEn) and attributing to each class of information a criticality index (IC) defining a rank of priority between the different classes of information to be transmitted;
• defining a plurality of possible transmission configurations (0, 1 ... n), each transmission configuration being defined by at least one characteristic of the group comprising : modulation scheme, parameter of the modulation scheme and transmission data rate;
• characterizing the thus-defined transmission configurations, by attributing to each transmission configuration a reliability index that is a reverse function of the transmission failure probability in a noisy environment;
• orderly matching the criticality indices with the transmission configurations, the criticality indices of the highest priorities being affected to the transmission configurations having the highest reliability indices, and the reverse;
- by the active implantable device, upon a request of emission of an information element to be transmitted:
• selecting (52-62) a transmission configuration as a function of the criticality index characterizing the information to be transmitte, and
• emitting (64, 66), with the thus-selected transmission configuration, a message containing the information element to be transmitted.

2. The method of claim 1, comprising, in case of request by the active implantable device of emission of a plurality of information elements to be transmitted in sequence:
- the emission of a plurality of successive sub-messages with, for each, a different transmission configuration, each of these sub-messages grouping the information elements that are **characterized by** a same criticality index.

3. The method of claim 2, wherein the successive sub-messages are emitted starting from those grouping the information elements **characterized by** the highest criticality indices.

4. The method of claim 1, wherein the modulation schemes of the various transmission configurations are chosen in the group comprising: frequency shift FSK modulation, Gaussian frequency shift GFSK modulation, phase shift PSK modulation, quadrature phase shift QPSK modulation, orthogonal quadrature phase shift OQPSK modulation, minimal displacement MSK modulation, spectrum spreading SF modulation, on-off OOK modulation.

5. The method of claim 1, wherein the data transmission rates of the various transmission configurations are chosen in the group comprising the values : 2 kbps, 16 kbps, 32 kbps, 100 kbps, 200 kbps and 400 kbps.
